# FASCICULE DE BREVET EUROPEEN

(11) **EP 1 698 192 B1**
(45) Date de publication et mention de la délivrance du brevet: **28.04.2010**
(21) Numéro de dépôt: 04791530.1
(22) Date de dépôt: 14.10.2004
(51) Int. Cl.: H04M 1/57

(54) **PROCEDE ET TELEPHONE POUR TELECHARGER UN CONTENU AUDIO ET VIDEO POUR SIGNALER UN APPEL**
VERFAHREN UND TELEPHON ZUM HERUNTERLADEN VON AUDIO- UND VIDEOINHALT ZUR ANRUFANZEIGE
METHOD AND TELEPHONE FOR DOWNLOADING AUDIO AND VIDEO CONTENT FOR CALL INDICATION

(30) Priorité: 14.10.2003 FR 0311976
(43) Date de publication de la demande: 06.09.2006
(73) Titulaire: Musiwave SA, 75020 Paris (FR)
(72) Inventeur: DECUGIS, Guillaume, F-75017 Paris (FR)
(74) Mandataire: Goddar, Heinz J.
(86) Numéro de dépôt international: PCT/FR2004/002618
(87) Numéro de publication internationale: WO 2005/039217

(56) Documents cités:
- EP-A- 1 033 857
- EP-A- 1 202 536
- EP-A- 1 330 101
- US-A1- 2003 109 252

## Description

### DOMAINE TECHNIQUE

La présente invention est relative à la personnalisation de téléphones mobiles.

Elle est en particulier relative au téléchargement de contenus de personnalisation sur des téléphones mobiles (sonneries, écrans, etc.).

On connaît depuis longtemps des services permettant de télécharger sur des téléphones mobiles des sonneries qui permettent à l'utilisateur de personnaliser son téléphone.

Sur les téléphones portables de génération relativement ancienne, ces sonneries étaient des sonneries monophoniques réalisées au moyen de synthétiseurs de type MIDI Ces sonneries MIDI ont ensuite évolué pour devenir polyphoniques.

Plus récemment, les constructeurs de téléphones portables ont proposé de télécharger des sonneries correspondant à des sons réels, et par exemple des sonneries proches de musiques originales (extraits de chansons, etc...).

Plus précisément, l'invention se rapporte un procédé pour la personnalisation de téléphones mobiles, consistant à télécharger, outre une sonnerie via un contenu audio, des données comportant un contenu d'animation graphique destiné à être affiché sur l'écran du téléphone mobile lorsque le contenu audio est joué sur le téléphone à la réception d'un appel entrant.

L'invention se rapporte en outre à un téléphone mobile comportant des moyens pour télécharger des sonneries de personnalisation de téléphones mobiles, une couche d'exploitation apte à mémoriser une application de lecture de contenu d'animations graphiques, des moyens pour déclencher la lecture de ce contenu d'animations graphiques à réception d'un appel entrant.

### ÉTAT DE LA TECHNIQUE

On connaît de tels procédés et téléphones mobiles par exemple du document EP A 033 857 qui se rapporte notamment à un téléphone mobile, permettant un affichage plus apprêté d'une partie appelante au moment où l'appel est reçu. A cet effet, ce document propose un téléphone mobile permettant à un utilisateur d'identifier une partie appelante via une image stockée dans la mémoire du téléphone et apparaissant sur l'écran du téléphone au moment de l'appel. L'image stockée peut être obtenue d'un terminal d'information qui la possède, ce dernier étant connecté à un réseau de communication via des moyens de réception/transmission radio résidant dans le téléphone mobile. Cette image peut être un film qui peut être stockée en mémoire pour un bref délai, par exemple neuf secondes correspondant aux trois sonorités entrantes. Le document EP A 033 857 enseigne que le téléphone mobile comprend des moyens de contrôle/commande pour lire/afficher l'image. Un inconvénient de cette technique est que le téléphone mobile ne peut lire que les formats de contenus audio et d'image selon les applications de lecture installées dans ledit téléphone mobile. Il ne peut ni lire ni afficher des images obtenues via le réseau de communication pour lesquelles il ne possède pas l'application de lecture.

On connaît également le document EP A 1 330 101 qui enseigne la reproduction, synchronisée avec les vibrations émises par un vibrateur de dispositif terminal portable comme un téléphone portable, de parole, image, tonalités musicales, et texte. Ce document enseigne que le dispositif terminal portable est apte à télécharger des données de séquence sonore, des données de séquence d'affichage, et des données de séquence de vibrations, à partir d'un serveur connecté à un réseau de télécommunications aux moyens de communications sans fil. Ce document ne se rapporte pas au téléchargement de contenus d'animations graphiques, ni au déclenchement de la lecture d'un contenu d'animations graphiques à réception d'un appel entrant.

US2003/0109252 A1 décrit un terminal qui télécharge un fichier exécutable permettant de lire un codec particulier. Ceci permet au terminal de lire un contenu multimédia initialement non supporté par le terminal.

### PRESENTATION GENERALE DE L'INVENTION

L'invention propose quant à elle de pallier ces inconvénients, par un nouveau type de traitement de personnalisation de la réception d'appel de téléphones portables.

Elle propose en particulier de compléter un contenu audio servant de sonnerie d'appel personnalisée, par une animation graphique associée à cette sonnerie et s'affichant à écran de façon synchronisée ou simultanée par rapport à la sonnerie d'appel.

Un problème qui se pose toutefois est que l'architecture des téléphones portables n'est généralement pas conçue pour permettre le déclenchement de la lecture d'un objet multimédia à réception d'un appel entrant.

On souhaite en effet pouvoir disposer de solution permettant de faire jouer au téléphone la combinaison d'un contenu audio et d'un contenu graphique lorsqu'il reçoit un appel entrant, ce même si le téléphone n'est pas d'une architecture adaptée pour déclencher la lecture d'un objet multimédia à réception d'un appel entrant.

L'invention propose quant à elle un procédé pour la personnalisation de téléphones mobiles, consistant à télécharger, outre une sonnerie via un contenu audio, des données comportant un contenu d'animation graphique destiné à être affiché sur l'écran du téléphone mobile lorsque le contenu audio est joué sur le téléphone à la réception d'un appel entrant, caractérisé en ce qu'il consiste en outre à télécharger une application de lecture de contenu d'animations graphiques, et le cas échéant également de contenu audio, étant simultanément téléchargée ou ayant été préalablement téléchargée et mémorisée au niveau de la couche d'exploitation du téléphone mobile.

Elle propose également un téléphone mobile comportant des moyens pour télécharger des sonneries de personnalisation de téléphones mobiles, une couche d'exploitation apte à mémoriser une application de lecture de contenu d'animations graphiques, des moyens pour déclencher la lecture de ce contenu d'animations graphiques à réception d'un appel entrant, caractérisé en ce que le téléphone comprend des moyens pour télécharger une application de lecture de contenu d'animations graphiques, et des moyens de mémorisation de l'application de lecture au niveau de la couche d'exploitation du téléphone mobile.

Comme on l'aura compris, les différentes solutions proposées par l'invention trouve en particulier avantageusement application, sans que cela ne soit limitatif, dans le cas de téléphones équipés de logiciels d'exploitation (OS) de type « *symbian »* et en particulier ceux dont les téléphones sont équipés d'interfaces de type « *séries 60* ».

On rappelle que l'OS « *symbian »* est une partie logicielle qui, pour les téléphones qui sont basés sur cet outil, fournit entre autre un ensemble de fonctionnalités basiques, dont la gestion des drivers matériels, un grand nombre de contrôle graphique et les fonctions de gestion des mémoires.

Quant à « *Séries 60 »,* il s'agit d'un logiciel intégré (« *framework* ») graphique édité par la société NOKIA, sur la base d'un environnement Symbian et qui fournit entre autre les fonctions de téléphonie et d'IHM.

D'autres caractéristiques et avantages de l'invention ressortiront encore de la description qui suit, laquelle est purement illustrative et non limitative.

Ainsi, de façon beaucoup plus générale, un problème qui se pose est celui du déclenchement d'un contenu de personnalisation à la réception d'un appel entrant

Différents aspects de l'invention, permettant notamment de résoudre ce problème sont ici présentés.
1) Notamment, suivant une caractéristique de l'invention, il est proposé un procédé pour permettre en outre la lecture d'au moins un contenu de personnalisation, tel qu'un contenu graphique ou un contenu audio, à réception d'un appel entrant sur un téléphone mobile, caractérisé en ce qu'une application de tâche de fond téléchargée dans la couche d'exploitation du téléphone mobile, surveille la notification d'un appel entrant au serveur de téléphonie de ladite couche et active la lecture dudit contenu par l'application de lecture lors de la notification d'un appel entrant.

Plus spécifiquement, elle propose un procédé pour permettre la lecture sensiblement synchrone d'un contenu audio et d'un contenu graphique à réception d'un appel entrant sur un téléphone mobile, caractérisé en ce qu'une application de tâche de fond, téléchargée dans la couche d'exploitation du téléphone mobile, surveille la notification d'un appel entrant au serveur de téléphonie de ladite couche et active la lecture du contenu graphique par l'application de lecture lors de la notification d'un appel entrant.

L'invention propose en outre un téléphone mobile apte à permettre la lecture d'au moins un contenu de personnalisation à réception d'un appel entrant, caractérisé en ce qu'il comporte une application de tâche de fond, téléchargée dans la couche d'exploitation du téléphone mobile, apte à surveiller la notification d'un appel au serveur de téléphonie de ladite couche et à activer la lecture dudit contenu par l'application de lecture à réception d'un appel entrant.

Egalement, elle propose un téléphone mobile apte à permettre la lecture sensiblement synchrone d'un contenu audio et d'un contenu graphique à réception d'un appel entrant, caractérisé en ce qu'il comporte une application de tâche de fond, téléchargée dans la couche d'exploitation du téléphone mobile, apte à surveiller la notification d'un appel au serveur de téléphonie de ladite couche et à activer la lecture du contenu graphique par l'application de lecture à réception d'un appel entrant.
2) Selon un autre aspect, l'invention propose un procédé pour permettre la lecture d'au moins un contenu d'animation à réception d'un appel entrant sur un téléphone mobile, caractérisé en ce qu'une application de lecture du contenu graphique téléchargée dans la couche d'exploitation du téléphone mobile, surveille en tâche de fond l'activation d'un codec et active la lecture du contenu de personnalisation associé lorsque ladite activation de codec est détectée

Plus spécifiquement, il est proposé un procédé pour permettre la lecture sensiblement synchrone d'un contenu audio et d'un contenu graphique à réception d'un appel entrant sur un téléphone mobile, caractérisé en ce qu'une application de lecture du contenu graphique téléchargée dans la couche d'exploitation du téléphone mobile, surveille en tâche de fond l'activation d'un codec correspondant au contenu audio et active la lecture du contenu graphique associé lorsque ladite activation de codec est détectée.

Egalement, l'invention propose un téléphone mobile apte à permettre la lecture d'au moins un contenu de personnalisation à réception d'un appel entrant, caractérisé en ce qu'il comporte une application de lecture du contenu graphique, téléchargée dans la couche d'exploitation du téléphone mobile, apte à surveiller en tâche de fond l'activation d'un codec correspondant audit contenu et à activer la lecture du contenu de personnalisation associé lorsque ladite activation de codec est détectée.
3) Selon un autre aspect encore, l'invention propose un procédé pour permettre la lecture d'au moins un contenu de personnalisation à réception d'un appel entrant sur un téléphone mobile, caractérisé en ce qu'une application de lecture du contenu téléchargée dans la couche d'exploitation du téléphone mobile, surveille en tâche de fond la notification d'un appel entrant à une application téléphonie d'interface ou au serveur de téléphonie de ladite couche et active la lecture dudit contenu lors de la notification d'un appel entrant.

Plus précisément, un procédé pour permettre la lecture sensiblement synchrone d'un contenu audio et d'un contenu graphique à réception d'un appel entrant sur un téléphone mobile, caractérisé en ce qu'une application de lecture du contenu graphique téléchargée dans la couche d'exploitation du téléphone mobile, surveille en tâche de fond la notification d'un appel entrant à une application téléphonie d'interface ou au serveur de téléphonie de ladite couche et active la lecture du contenu graphique lors de la notification d'un appel entrant.

Egalement, il est proposé un téléphone mobile apte à permettre la lecture d'au moins un contenu de personnalisation à réception d'un appel entrant sur un téléphone mobile, caractérisé en ce qu'il comporte une application de lecture dudit contenu, téléchargée dans la couche d'exploitation du téléphone mobile, apte à surveiller en tâche de fond la notification d'un appel entrant à une application téléphonie d'interface ou au serveur de téléphonie de ladite couche et à activer la lecture dudit contenu lors de la notification d'un appel entrant.

Plus spécifiquement, il est proposé un téléphone mobile apte à permettre la lecture sensiblement synchrone d'un contenu audio et d'un contenu graphique à réception d'un appel entrant sur un téléphone mobile, caractérisé en ce qu'il comporte une application de lecture du contenu graphique, téléchargée dans la couche d'exploitation du téléphone mobile, apte à surveiller en tâche de fond la notification d'un appel entrant à une application téléphonie d'interface ou au serveur de téléphonie de ladite couche et à activer la lecture du contenu graphique lors de la notification d'un appel entrant.

En alternative, un codec est déclaré au niveau du système. Ce codec est associé à un type de contenu et à une extension de fichier.

Les données téléchargées de ce type sont automatiquement associées à ce codec qui comporte un contenu audio et un contenu d'animations graphiques, une application de lecture d'un codec de ce type étant simultanément téléchargée ou ayant été préalablement téléchargée et mémorisée au niveau de la couche d'exploitation du téléphone mobile.
4) Selon un autre aspect encore de l'invention, il est proposé un procédé pour activer au moins un contenu de personnalisation lors de la réception d'un appel entrant sur un téléphone mobile, caractérisé en ce qu'il comprend les étapes consistant à :
   - télécharger au moins ledit contenu,
   - placer automatiquement ledit contenu comme favori destiné à être activée lors du prochain appel entrant, cette étape étant réalisée sans intervention de l'utilisateur dans différents menus de configuration du téléphone.

Plus spécifiquement,il est proposé un procédé pour activer un contenu audio lors de la réception d'un appel entrant sur un téléphone mobile, caractérisé en ce qu'il comprend les étapes consistant à :
- télécharger le contenu audio et un contenu d'animation graphique associé,
- placer automatiquement le contenu audio comme favori destiné à être activée lors du prochain appel entrant, cette étape étant réalisée sans intervention de l'utilisateur, dans différents menus de configuration du téléphone.

Egalement, il est proposé un téléphone mobile apte à permettre la lecture d'au moins un contenu de personnalisation à réception d'un appel entrant sur un téléphone mobile, caractérisé en ce qu'il comprend une application qui lors du téléchargement dudit contenu le place automatiquement comme favori destiné à être activée lors du prochain appel entrant, cette étape étant réalisée sans intervention de l'utilisateur dans différents menus de configuration du téléphone.
5) Selon un autre aspect encore de l'invention, il est proposé un procédé pour la personnalisation de téléphones mobiles, caractérisé en ce qu'il comprend les étapes selon lesquels :
   - un utilisateur compose un contenu combiné par l'association d'un contenu audio et d'un contenu d'animation graphique, à partir de contenus déjà présents dans le téléphone ou qu'il peut télécharger par ailleurs, au moyen d'une application d'interface mémorisée au niveau de la couche d'exploitation du téléphone,
   - lorsque le contenu audio est joué sur le téléphone à la réception d'un appel entrant, une application de lecture de contenu d'animations graphiques, et le cas échéant également de contenu audio, lit le contenu d'animation graphique.

Il est également proposé un téléphone mobile, caractérisé en ce qu'il comprend une application d'interface, mémorisée au niveau de la couche d'exploitation du téléphone, apte à permettre à l'utilisateur de composer un contenu combiné par l'association d'un contenu audio et d'un contenu d'animation graphique, à partir de contenus déjà présents dans le téléphone ou qu'il peut télécharger par ailleurs, le contenu d'animation graphique étant destiné à être lue par une application de lecture du téléphone lorsque le contenu audio est joué sur le téléphone à la réception d'un appel entrant
6) Selon un autre aspect intéressant encore, il est proposé un procédé pour permettre la lecture contenu d'animation graphique à réception d'un appel entrant sur un téléphone mobile, caractérisé en ce qu'il comprend les étapes consistant à
   - enregistrer dans le téléphone mobile un contenu d'animation graphique sous forme d'images fixes au format natif,
   - lors de la réception d'un appel entrant, afficher de manière enchaînée les images fixes au format natif suivant une « frame rate » paramétrable.
7) Il est également proposé un téléphone mobile apte à permettre la lecture d'un contenu d'animation graphique à réception d'un appel entrant, caractérisé en ce qu'il comporte une application lecture apte à afficher de manière enchaînée des images fixes au format natif suivant une « frame rate » paramétrable à réception d'un appel entrant.

Selon un autre aspect encore, il est proposé un procédé de téléchargement de sonneries pour la personnalisation de téléphones mobiles, caractérisé en ce qu'il comprend les étapes consistant à :
- mémoriser un fichier incluant un contenu audio et/ou un contenu d'animation graphique, sous forme cryptée, au niveau de la couche d'exploitation du téléphone,
- lors de la réception d'un appel entrant, décrypter le fichier en mémoire vive et lire le contenu audio et/ou le contenu graphique.

Il est également proposé un téléphone mobile apte à permettre le téléchargement de sonneries pour la personnalisation de téléphones mobiles, caractérisé en ce qu'il comprend des moyens pour mémoriser un fichier incluant un contenu audio et/ou un contenu d'animation graphique, sous forme cryptée, au niveau de la couche d'exploitation du téléphone et une application de lecture apte, lors de la réception d'un appel entrant, à décrypter le fichier en mémoire vive et à lire le contenu audio et/ou le contenu graphique.
8) Egalement, il est proposé un procédé de téléchargement et de lecture d'un contenu d'animation selon lequel on transfert ledit contenu au téléphone dans un format compressé et on stocke ledit contenu dans celui-ci dans un format décompressé, ledit contenu étant lu en temps réel sous ce format à la réception d'un appel entrant.

### PRESENTATIONS DES DESSINS

Cette description doit être lue en regard des dessins annexés sur lesquels :
- la figure 1 illustre de façon simplifiée un exemple d'architecture logicielle sur un téléphone portable ;
- les figures 2 à 4 illustrent trois variantes de mise en oeuvre possible de l'invention sur une telle architecture.

### DESCRIPTION D'UN OU PLUSIEURS MODES DE REALISATION ET DE MISE EN OEUVRE DETAILLES

### Architecture générale

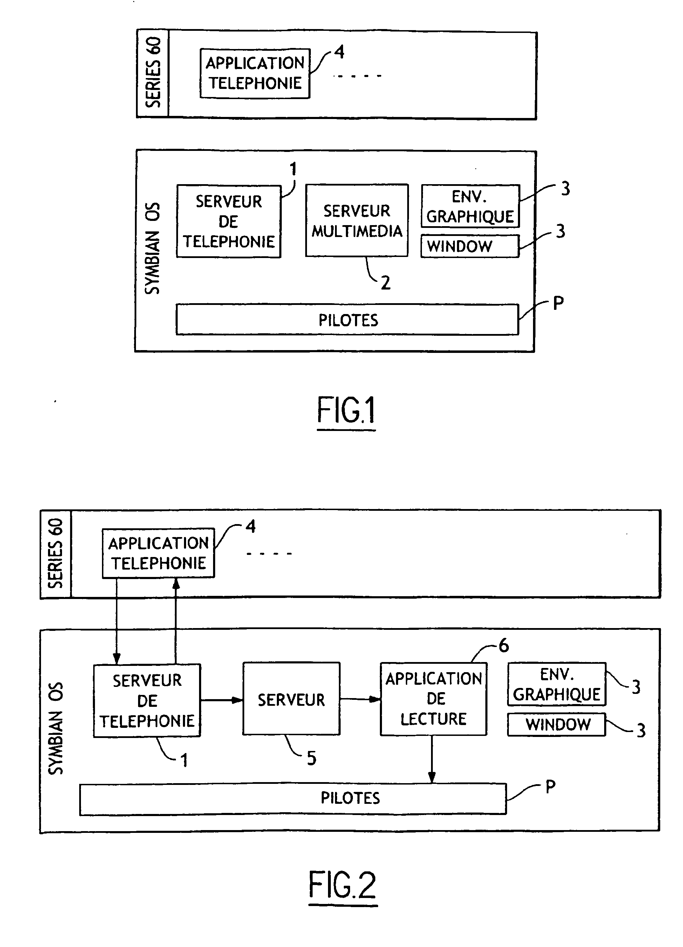

On a représenté de façon schématique sur la figure 1 l'architecture logicielle d'un téléphone portable qui comporte une couche OS d'exploitation et un environnement applicatif d'interface graphique IG, par exemple de type « Series 60 ».

La couche d'exploitation intègre notamment :
- un serveur 1 de téléphonie qui gère le dialogue avec la pile ou « stack » protocole GSM/GPRS ; ce serveur 1 récupère les événements concernant les appels et les distribuent aux applications qui en font la demande ;
- un serveur multimédia 2 qui gère des codecs (objets comprimés) audio ou vidéo ;
- différentes applications graphiques 3.

L'interface graphique IG comporte en particulier une application 4 téléphonie restant en permanence active en tâche de fond et gérant notamment les appels entrant et le dialogue avec le serveur 1.

### Première variante : l'utilisation d'un serveur de tâche de fond

Ainsi que l'illustre la figure 2, on peut utiliser un serveur 5 de tâche de fond, par exemple téléchargé sur le téléphone portable, et dont la fonction est de détecter l'arrivée d'appels entrants, en parallèle des moyens classiquement mobilisés par un téléphone portable pour gérer lesdits appels.

Lorsque ce serveur 5 de tâche de fond détecte un appel entrant, il déclenche l'exécution de l'affichage de l'animation graphique, tandis que la sonnerie est déclenchée par les moyens qui interviennent classiquement dans la gestion d'un appel entrant d'un téléphone et en particulier par l'application de téléphonie 4.

Le serveur 5 de tâche de fond est mémorisé dans la couche d'exploitation et surveille le déclenchement d'un événement particulier lié à l'arrivée d'un appel entrant, au niveau du serveur de téléphonie 1.

Lorsqu'il détecte cet événement, le serveur 5 déclenche une application de lecture 6 (« Player ») qui joue sur l'écran du téléphone l'animation graphique.

Cette application de lecture 6 est également mémorisée au niveau de la couche d'exploitation.

En parallèle, l'application 4 de téléphonie joue la mélodie, le son réel, etc. qui correspond à la sonnerie personnalisée choisie par l'utilisateur (sonnerie à laquelle l'animation graphique est associée)

Comme, on l'aura compris, une telle architecture à serveur de tâche de fond permet de jouer en parallèle de façon sensiblement synchronisée le contenu audio et le contenu d'animation graphique.

Le serveur 5 de tâche de fond est par exemple téléchargé sur le téléphone portable lorsque l'utilisateur se connecte à un serveur de contenu de personnalisation et télécharge pour la première fois un contenu audio et le contenu d'animation graphique qui lui correspond.

Dans ce cas, le contenu d'animation graphique est lui-même avantageusement téléchargé avec l'application de lecture 6.

On notera que pour afficher directement l'animation graphique 6 alors même que l'architecture du téléphone donne généralement une priorité forte à l'application téléphonie lors de la présentation d'un appel, cette application de lecture 6 court-circuite avantageusement les couches graphiques du téléphone pour écrire directement la mémoire écran.

On évite ainsi des conflits éventuels entre le lecteur de l'animation graphique et les couches graphiques classiques du logiciel graphique et/ou de l'OS d'un téléphone mobile.

Pour éviter des conflits de commande avec les différentes fonctions du téléphone susceptibles de générer un affichage d'icônes dans certaines zones de l'écran, on prévoit également avantageusement des masques particuliers sur ces zones. Leur fonctionnement est le suivant : l'icône est masquée au premier affichage et elle est réimprimée sur le fond de l'animation dès son premier « rafraîchissement ». Ensuite, la zone de l'icône n'est plus remise à jour, ce qui fait que l'icône n'est plus cycliquement effacée / affichée, ce qui supprime l'effet désagréable de clignotement rapide.

De cette façon, on ne fait pas disparaître ou clignoter les icônes qui sont normalement activées à la réception d'un appel ou encore lorsque le téléphone mobile est connecté à un chargeur, lorsque la fonction d'échange infrarouge est activée, etc.

### 2^{ème} variante : l'activation d'une application de lecture de contenu graphique par un codec audio

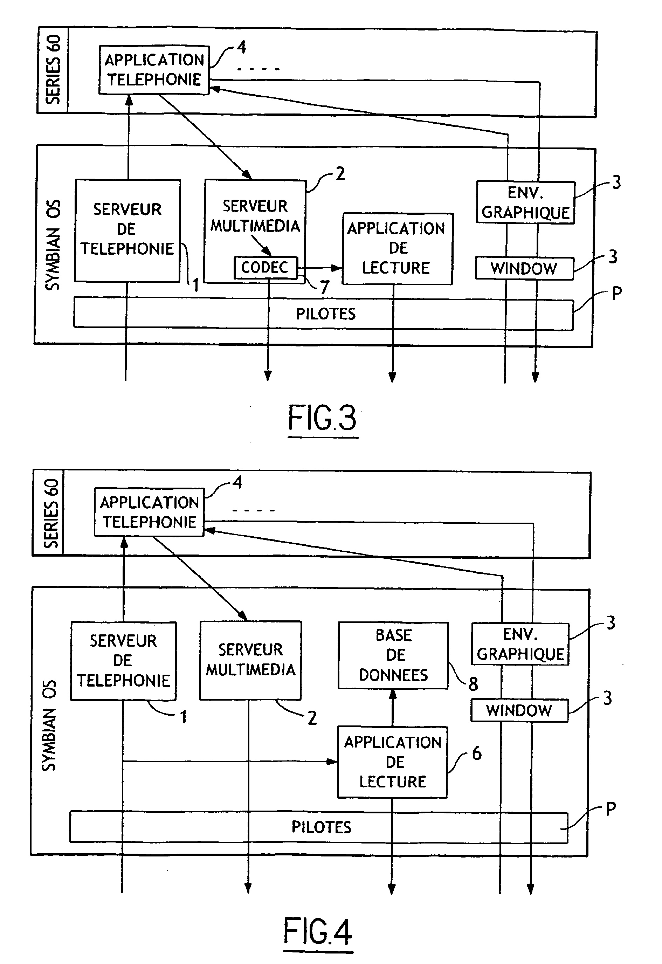

Dans la variante illustrée sur la figure 3, un codec est mémorisé au niveau du serveur multimédia, tandis qu'un logiciel de lecture 6 surveille en tâche de fond l'activation de ce codec. Les codecs sont associés à un lecteur multimédia et les fichiers de contenu qui correspondent à un codec peuvent être sélectionnés comme sonnerie.

Par sonnerie, on entend ici et dans tout le présent texte, toute mélodie ou son réel et de façon générale tout contenu audio destiné à être joué lors d'un appel entrant pour avertir l'utilisateur de cet événement.

Les étapes de fonctionnement sont alors les suivantes.

L'arrivée d'un appel entrant est signalée à l'application de téléphonique 4.

Celle-ci active, de façon classique, l'écran de présentation d'appel.

En parallèle, la détection de l'appel par le logiciel de tâche de fond active dans le contenu multimédia la mélodie/sonnerie sélectionnée.

Ceci active le codec 7.

L'activation du codec 7 est détectée par l'application de lecture 6 qui restitue, en parallèle à la lecture du flux audio, le flux graphique, jusqu'à ce que l'événement « *décrocher*/*raccrocher »* soit récupéré.

### 3^{ème} variante : l'application de lecture est déclenchée par la détection d'un événement de signalisation d'appel

Dans la variante illustrée sur la figure 4, l'application de lecture 6 surveille en tâche de fond la signalisation d'un appel entrant à l'application de téléphonie 3.

Dans ce cas, lorsqu'un événement signalant un appel entrant est détecté par cette application de lecture 6, celle-ci interroge les mises à jour de l'utilisateur (base de données 8 mémorisée dans la couche d'exploitation) pour vérifier si la sonnerie sélectionnée correspond à un contenu graphique, puis, le cas échéant, restitue ce contenu graphique, lequel est par exemple mémorisé dans le une zone dédiée du « File System » et associé au serveur multimédia 3 grâce à un codec.

En parallèle, la signalisation d'un appel entrant à l'application 4 active la mélodie ou sonnerie sélectionnée, qui est alors elle aussi restituée. Le flux audio et le flux graphique sont ainsi joués jusqu'à récupération de l'événement « *décrocher*/*raccrocher* ».

### 4^{ème} variante l'utilisation d'un codec contenant une animation en plus du son

Une autre variante possible encore est d'utiliser un codec contenant une animation en plus d'un contenu de son.

Ceci dans le cas d'un système d'exploitation ouvert autorisant par exemple le développement et l'installation d'un lecteur de contenu utilisable également dans les menus de paramétrage de la sonnerie et que nous destinons à être dédié à un type de contenu de sonnerie.

Si un contenu de ce type est sélectionné comme sonnerie, ce lecteur de contenu est appelé pour chaque appel entrant.

Il ne pose alors aucun problème de synchronisation ; aucun développement spécifique n'est nécessaire.

### Téléchargement des contenus d'animations

Dans la très grande majorité des mobiles actuels, la puissance du processeur n'est pas suffisante pour décoder à la volée des conteneurs images standards (gif, png, jpeg, ..).

Pour palier cette difficulté, on propose d'utiliser le format d'image natif du mobile ou de son système d'exploitation soit directement dans le conteneur, soit en convertissant un format standard (gif, png, jpeg, ..) lors de l'installation pour le stocker dans le format natif du mobile.

Par ailleurs, la non disponibilité d'un format natif de type animé conduit à intégrer à l'application de lecture (« player ») la capacité à afficher de manière enchaînée des images fixes au format natif suivant un « frame rate » paramétrable.

Cette deuxième solution présente l'avantage déterminant de diminuer la taille de l'objet à télécharger pour installer le contenu multimédia.

Par ailleurs, selon un autre aspect également, il est proposé de transférer les images au téléphone dans un format compressé, puis de les stocker en mode décompressé afin de ne pas avoir à les décompresser en temps réel. Il en résulte un gain de temps au téléchargement, ainsi qu'un gain de CPU lors de l'activation des images.

### Installation des sonneries

Par ailleurs, de façon classique, lorsqu'il installe du contenu de personnalisation de son téléphone, par exemple une nouvelle sonnerie, l'utilisateur doit trouver dans son téléphone le ou les menu(s) de paramétrage qui conviennent, puis rechercher le (ou les) fichier(s) téléchargé(s) à l'endroit où il a été stocké.

Dans le cas de sonneries associées à des contenus graphiques, les difficultés suivantes se sur ajoutent:

Plusieurs éléments sont nécessaires et il est important que ces objets ne soient pas téléchargés séparément mais en un seul fichier.

De plus, il peut être nécessaire de formater les noms de fichiers (préfixe, post fixe, extension, ...), de les placer dans des répertoires spécifiques et les décompresser et/ou les formater (contraintes imposées par l'OS ou le framework).

Pour résoudre toutes ces difficultés, il est proposé de regrouper tous les éléments nécessaires au fonctionnement lors de l'installation.

Ainsi, à chaque téléchargement, on transmet au téléphone non seulement le contenu audio et le contenu d'animations graphiques (correspondant à un ou plusieurs fichiers), mais également la ou les applications de lecture.

Il est également avantageusement prévu de télécharger en même temps par exemple un fichier de configuration, etc....

Cette solution apporte simplicité et confort à l'utilisateur, et permet le fonctionnement du contenu audio combiné au contenu d'animation graphique dans l'environnement du téléphone.

De façon plus générale, ce mécanisme peut être utilisé pour tous les autres cas où des contenus groupés peuvent s'avérer intéressants : on peut par exemple grouper les contenus suivants Offre Sonnerie + papier peint + Economiseur d'écran.

### Gestion des favoris

Egalement, il peut être prévu qu'une nouvelle sonnerie téléchargée se place automatiquement comme favori destiné à être activé lors du prochain appel entrant.

Cette sonnerie remplace alors le favori précédent.

A cet effet, on installe l'application ou on active un contenu associé au codec, l'ensemble des actions nécessaires à l'activation simultané du son et du graphisme étant faites automatiquement et sans intervention de l'utilisateur dans les différents menus de configuration du téléphone.

En outre, des moyens peuvent être prévus pour détecter que l'utilisateur décide de changer sa sonnerie favorite, et bloquer l'activation de l'animation graphique correspondante lorsqu'un changement de ce type est détecté.

### Composition par l'utilisateur

On prévoit avantageusement au niveau de la couche d'exploitation une application d'interface (le cas échéant également téléchargée sur demande de l'utilisateur ou lors de la première connexion) qui permet à l'utilisateur de composer ses propres contenus combinés (animation graphique/sonnerie) à partir du contenu déjà présent sur son téléphone ou qu'il peut télécharger par ailleurs (Sonneries, photos, gif animés, memos vocaux, ...).

Une fois assemblée, ce contenu combiné est semblable à ceux conçus téléchargés.

Bien entendu, les prises de photos et enregistrements du son peuvent également être directement effectuées à partir de l'appareil photo et de l'enregistreur du téléphone.

De cette façon, l'utilisateur peut personnaliser son mobile à partir d'éléments personnels.

### Protection du contenu

L'utilisation d'un logiciel de lecture ou « player » permet la mise en oeuvre d'un mécanisme simple de protection du contenu des fichiers. Le fichier est crypté dans le fichier conteneur et il est décrypté en mémoire vive afin qu'un utilisateur mal intentionné ne puisse pas copier les fichiers à l'aide d'un explorateur de fichiers (« File System ») pour l'utiliser à des fins qui n'entrent pas dans le cadre de son contrat de licence d'utilisation, et notamment de l'envoyer à d'autres utilisateurs qui n'auraient pas acheté ce contenu.

Ce même mécanisme est utilisé pour proposer un module de démonstration avant achat. Ainsi, l'utilisateur ne peut pas obtenir la démonstration et en détourner le contenu à d'autres fins.

Comme on l'aura compris, l'invention a été plus spécifiquement décrite dans le cas de contenu de personnalisation de type animation graphique. Elle s'applique de façon générale à tout contenu de personnalisation : contenu audio, écrans de veille, etc...

## Revendications

1. Procédé pour la personnalisation de téléphones mobiles, consistant à télécharger, outre une sonnerie via un contenu audio, des données comportant un contenu d'animation graphique destiné à être affiché sur l'écran du téléphone mobile lorsque le contenu audio est joué sur le téléphone à la réception d'un appel entrant, **caractérisé en ce qu'**il consiste en outre à télécharger une application de lecture (6) de contenu d'animations graphiques, et le cas échéant également de contenu audio, étant simultanément téléchargée ou ayant été préalablement téléchargée et mémorisée au niveau de la couche d'exploitation du téléphone mobile et **en ce qu'**avec l'application de lecture du contenu graphique est téléchargée dans la couche d'exploitation du téléphone mobile une application de tache de fond qui surveille la notification d'un appel au serveur de téléphonie de ladite couche et active la lecture du contenu graphique par l'application de lecture.

2. Procédé selon la revendication 1, **caractérisé en ce que** les données téléchargées comportent un codec (7) qui comporte un contenu audio et un contenu d'animations graphiques, une application de lecture (6) d'un codec (7) de ce type étant simultanément téléchargée ou ayant été préalablement téléchargée et mémorisée au niveau de la couche d'exploitation du téléphone mobile.

3. Procédé selon la revendication 1, **caractérisé en ce que** les données téléchargées comportent un codec (7) qui comporte un contenu audio et un codec (7) qui comporte un contenu d'animations graphiques.

4. Procédé selon l'une des revendications précédentes, **caractérisé en ce que**, à chaque nouveau téléchargement, les données téléchargées comportent une application de lecture (6) du contenu d'animations graphiques et/ou du contenu audio.

5. Procédé selon la revendication 4, **caractérisé en ce que** les données téléchargées comportent en outre un ou plusieurs fichiers de configuration.

6. Procédé selon l'une des revendications 1 à 5, **caractérisé en ce que** l'application de lecture téléchargée dans la couche d'exploitation surveille en tâche de fond l'activation d'un codec (7) correspondant à la sonnerie qui lui est associée, la lecture du contenu d'animation graphique étant déclenchée lorsque ladite activation de codec (7) est détectée.

7. Procédé selon l'une des revendications 1 à 5, **caractérisé en ce** l'application de lecture téléchargée dans la couche d'exploitation surveille en tâche de fond la signalisation d'un appel à une application téléphonie d'interface ou au serveur de téléphonie (1) de la couche d'exploitation, la lecture du contenu d'animation graphique étant déclenchée lorsqu'un événement correspondant à cette signalisation est détecté.

8. Procédé selon l'une des revendications précédentes, **caractérisé en ce que** l'application de lecture (6) court-circuite les couches graphiques du téléphone pour écrire directement dans la mémoire écran.

9. Procédé selon la revendication 8, **caractérisé en ce que** l'application de lecture (6) utilise un masque pour ne pas entrer en conflit avec certaines zones d'affichage d'icônes du téléphone.

10. Procédé selon l'une des revendications précédentes, **caractérisé en ce que** les données sont téléchargées à partir d'un conteneur stockant des animations graphiques au format d'image natif du téléphone mobile ou de son système d'exploitation.

11. Procédé selon l'une des revendications 1 à 10, **caractérisé en ce que** lors du téléchargement, les données sont téléchargées en étant converties de façon que les animations graphiques soient stockées dans le téléphone mobile au format d'image natif de celui ci ou de son système d'exploitation.

12. Procédé selon l'une des revendications précédentes, **caractérisé en ce que** chaque nouvelle sonnerie, ou chaque nouvelle sonnerie et contenu d'animations graphiques, téléchargé, se mémorise automatiquement dans le téléphone portable comme favori destiné à être activé lors du prochain appel entrant.

13. Procédé selon la revendication 12, **caractérisé en ce qu'**on installe l'application ou on active un contenu associé au codec (7), l'ensemble des actions nécessaires à l'activation simultanée du son et du graphisme étant faites automatiquement au moyen d'un serveur (5) de tâche de fond et d'une application de téléphonie (4), ou au moyen d'une application de téléphonie (4) et d'un codec (7) dont l'activation est détectée par l'application de lecture, ou au moyen d'une application de téléphonie (4) et d'une application de lecture (6), ou par l'utilisation d'un codec (7) contenant une animation en plus du contenu son.

14. Procédé suivant l'une des revendications 1 à 13, **caractérisé en ce qu'**il comprend les étapes selon lesquelles:
- un utilisateur compose un contenu combiné par l'association d'un contenu audio et d'un contenu d'animation graphique, à partir de contenus déjà présents dans le téléphone ou qu'il peut télécharger par ailleurs, au moyen d'une application d'interface mémorisée au niveau de la couche d'exploitation du téléphone,
- lorsque le contenu audio est joué sur le téléphone à la réception d'un appel entrant, une application de lecture (6) de contenu d'animations graphiques, et le cas échéant également de contenu audio, lit le contenu d'animation graphique.

15. Procédé suivant l'une des revendications 1 à 14, **caractérisé en ce qu'**il comprend les étapes consistant à:
- enregistrer dans le téléphone mobile un contenu d'animation graphique sous forme d'images fixes au format natif suivant une «frame rate» paramétrable.

16. Procédé suivant l'une des revendications 1 à 14, **caractérisé en ce qu'**il comprend les étapes consistant à:
- mémoriser un fichier incluant un contenu audio et/ou un contenu d'animation graphique, sous forme cryptée, au niveau de la couche d'exploitation du téléphone,
- lors de la réception d'un appel entrant, décrypter le fichier en mémoire vive et lire le contenu audio et/ou le contenu graphique.

17. Procédé suivant l'une des revendications 1 à 14, selon lequel on transfère ledit contenu au téléphone dans un format compressé et on stocke ledit contenu dans celui-ci dans un format décompressé, ledit contenu étant lu en temps réel sous ce format à la réception d'un appel entrant.

18. Téléphone mobile comportant des moyens pour télécharger des sonneries de personnalisation de téléphones mobiles, une couche d'exploitation apte à mémoriser une application de lecture (6) de contenu d'animations graphiques, des moyens pour déclencher la lecture de ce contenu d'animations graphiques à réception d'un appel entrant, **caractérisé en ce que** le téléphone comprend des moyens pour télécharger une application de lecture (6) de contenu d'animations graphiques, des moyens de mémorisation de l'application de lecture (6) au niveau de la couche d'exploitation du téléphone mobile et
des moyens pour télécharger avec l'application de lecture du contenu graphique dans la couche d'exploitation du téléphone mobile une application de tache de fond qui surveille la notification d'un appel au serveur de téléphonie de ladite couche et active la lecture du contenu graphique par l'application de lecture.

19. Téléphone selon la revendication 18, **caractérisé en ce que** ladite application de lecture (6) est apte à lire un codec (7) qui comporte un contenu audio et un contenu d'animations graphiques.

20. Téléphone selon la revendication 18 ou 19, **caractérisé en ce qu'**avec l'application de lecture (6) du contenu graphique est une application de tache de fond apte à surveiller la notification d'un appel au serveur de téléphonie (1) de ladite couche et apte à activer la lecture du contenu graphique par l'application de lecture (6).

21. Téléphone selon l'une des revendications 18 et 19, **caractérisé en ce que** l'application de lecture est apte à surveiller en tâche de fond l'activation d'un codec (7) correspondant à la sonnerie qui lui est associée, la lecture du contenu d'animation graphique étant apte à être déclenchée lorsque ladite activation de codec (7) est détectée.

22. Téléphone selon l'une des revendications 18 et 19, **caractérisé en ce que** l'application de lecture (6) est apte à surveiller en tâche de fond la signalisation d'un appel à une application téléphonie d'interface ou au serveur de téléphonie (1) de la couche d'exploitation, la lecture du contenu d'animation graphique étant apte à être déclenchée lorsqu'un événement correspondant à cette signalisation est détecté.

23. Téléphone selon l'une des revendications 18 à 22, **caractérisé en ce que** l'application de lecture (6) est apte à court-circuiter les couches graphiques du téléphone pour attaquer directement la mémoire écran.

24. Téléphone selon la revendication 23, **caractérisé en ce que** l'application de lecture (6) comporte des moyens pour masquer certaines zones d'affichage d'icônes du téléphone.

25. Téléphone selon l'une des revendications 18 à 24, **caractérisé en ce qu'**il comporte des moyens aptes à détecter que l'utilisateur décide de changer sa sonnerie favorite, et à bloquer l'activation de l'animation graphique correspondante lorsqu'un changement de ce type est détecté.

26. Téléphone selon l'une des revendications 18 à 25, **caractérisé en ce qu'**il comporte une application d'interface le cas échéant également téléchargée qui permet à l'utilisateur de composer ses propres contenus combinés à partir du contenu déjà présent sur son téléphone ou qu'il peut télécharger par ailleurs.

27. Téléphone mobile suivant l'une des revendications 18 à 26, apte à permettre la lecture d'au moins un contenu de personnalisation à réception d'un appel entrant, **caractérisé en ce qu'**il comporte une application de lecture (6) du contenu graphique, éventuellement téléchargée dans la couche d'exploitation du téléphone mobile, apte à surveiller en tâche de fond l'activation d'un codec (7) correspondant audit contenu et à activer la lecture du contenu de personnalisation associé lorsque ladite activation de codec (7) est détectée.

28. Téléphone mobile suivant l'une des revendications 18 à 27, apte à permettre la lecture d'au moins un contenu de personnalisation à réception d'un appel entrant sur un téléphone mobile, **caractérisé en ce qu'**il comporte une application de lecture (6) dudit contenu, éventuellement téléchargée dans la couche d'exploitation du téléphone mobile, apte à surveiller en tache de fond la notification d'un appel entrant à une application téléphonie d'interface ou au serveur de téléphonie (1) de ladite couche et activer la lecture dudit contenu lors de la notification d'un appel entrant.

29. Téléphone mobile suivant l'une des revendications 18 à 28, apte à permettre la lecture sensiblement synchrone d'un contenu audio et d'un contenu graphique à réception d'un appel entrant sur un téléphone mobile, **caractérisé en ce qu'**il comporte une application de lecture (6) du contenu graphique, éventuellement téléchargée dans la couche d'exploitation du téléphone mobile, apte à surveiller en tâche de fond la notification d'un appel entrant à une application téléphonie d'interface ou au serveur de téléphonie (1) de ladite couche et à activer la lecture du contenu graphique lors de la notification d'un appel entrant.

30. Téléphone mobile suivant l'une des revendications 18 à 29, apte à permettre la lecture d'au moins un contenu de personnalisation à réception d'un appel entrant sur un téléphone mobile, **caractérisé en ce qu'**il comprend une application qui lors du téléchargement dudit contenu le place automatiquement comme favori destiné à être activée lors du prochain appel entrant, cette étape étant réalisée sans intervention de l'utilisateur dans différents menus de configuration du téléphone.

31. Téléphone mobile suivant l'une des revendications 18 à 30, **caractérisé en ce qu'**il comprend une application d'interface, mémorisée au niveau de la couche d'exploitation du téléphone, apte à permettre à l'utilisateur de composer un contenu combiné par l'association d'un contenu audio et d'un contenu d'animation graphique, à partir de contenus déjà présents dans le téléphone ou qu'il peut télécharger par ailleurs, le contenu d'animation graphique étant destiné à être lue par une application de lecture (6) du téléphone lorsque le contenu audio est joué sur le téléphone à la réception d'un appel entrant.

32. Téléphone mobile suivant l'une des revendications 18 à 31, apte à permettre la lecture d'un contenu d'animation graphique à réception d'un appel entrant, **caractérisé en ce qu'**il comporte une application lecture apte à afficher de manière enchaînée des images fixes au format natif suivant une «frame rate» paramétrable à réception d'un appel entrant.

33. Téléphone mobile suivant l'une des revendications 18 à 32, apte à permettre le téléchargement de sonneries pour la personnalisation de téléphones mobiles, **caractérisé en ce qu'**il comprend des moyens pour mémoriser un fichier incluant un contenu audio et/ou un contenu d'animation graphique, sous forme cryptée, au niveau de la couche d'exploitation du téléphone et une application de lecture (6) apte, lors de la réception d'un appel entrant, à décrypter le fichier en mémoire vive et à lire le contenu audio et/ou le contenu graphique.

## Claims

1. Method for personalizing mobile phones, comprising downloading in addition to ring tones via an audio content, data comprising a graphical animations content for being displayed on the screen of the mobile phone when the audio content is played on the phone upon reception of an incoming call, **characterized by** further downloading an application (6) for reading graphical animations content, and, if need be also for reading audio content, being simultaneously downloaded or having been downloaded beforehand and stored at the operating layer of the mobile phone, and by
downloading with the application for reading the graphical content, a background task application in the operating layer of the mobile phone, which monitors the notification of an incoming call to a phone server of said layer and activates the reading of the graphical content by the reading application.

2. Method according to claim 1, **characterized in that** the downloaded data comprises a codec (7) which comprises an audio content and a graphical animations content, an application (6) for reading such a type of codec (7) being simultaneously downloaded or having been previously downloaded and memorized at the operating layer of the mobile phone.

3. Method according to claim 1, **characterized in that** the downloaded data comprises a codec (7) which comprises an audio content and a codec (7) which comprises a graphical animations content.

4. Method according to one of the preceding claims, **characterized in that** at each new downloading, the downloaded data comprises an application (6) for reading the graphical animations content and/or audio content.

5. Method according to claim 4, **characterized in that** the downloaded data also comprises one or more configuration files.

6. Method according to one of the preceding claims 1 to 5, **characterized in that** the reading application downloaded in the operating layer monitors in background task the activation of a codec (7) corresponding to a ring tone which is associated to it, the reading of the graphical animations content being triggered when said codec (7) activation is detected.

7. Method according to one of the preceding claims I to 5, **characterized in that** the reading application downloaded in the operating layer monitors in background task the signalling of a call to an interface phone application or to the phone server (1) of the operating layer, the reading of the graphical animation content being triggered when an event corresponding to this signalling is detected.

8. Method according to one of the preceding claims, **characterized in that** the reading application (6) bypasses the graphical layers of the phone for writing directly in the screen memory.

9. Method according to claim 8, **characterized in that** the reading application (6) uses a mask for not entering into conflict with certain areas for displaying icons of the telephone.

10. Method according to one of the preceding claims, **characterized in that** the data are downloaded from a container storing graphical animations in a native format of the mobile phone or of its operating system.

11. Method according to one of the preceding claims 1 to 10, **characterized in that** during the downloading, the data are downloaded while being converted such that the graphical animations are stored in the mobile phone in the native image format of the latter or of its operating system.

12. Method according to one of the preceding claims, **characterized in that** each new downloaded ring tone or each new downloaded ring tone and graphical animations content is automatically memorized in the mobile phone as a favourite intended to be activated at the next incoming call.

13. Method according to claim 12, **characterized in that** the application is installed or the content associated to the codec (7) is activated, all the necessary actions for simultaneous activation of the sound and graphics being done automatically by means of a background task server (5) and a telephone application (4), or by means of a telephone application (4) and a codec (7), wherein the activation of the codec (7) is detected by the read application (6), or by means of a telephone application (4) and a read application (6), or by using a codec (7) containing an animation in addition to sound content.

14. Method according to one of claims 1 to 13, **characterized by** comprising the steps according to which:
- a user composes a combined content by associating an audio content and a graphical animation content, from contents already present in the phone or which he can download otherwise, by means of an interface application memorized at the operating layer of the phone,
- when the audio content is played on the phone upon reception of an incoming call, an application (6) for reading graphical content animation, and if need be for reading also audio content, read the graphical animation content.

15. Method according to one of claims 1 to 14, **characterized by** comprising the steps:
storing in the mobile phone a graphical animation content as fixed images in native format according to a parametrizable frame rate.

16. Method according to one of claims 1 to 14, **characterized by** comprising the steps:
- memorizing a file including an audio content and/or a graphical animation content, in encrypted form, at the operating layer of the phone,
- upon reception of an incoming call, decrypting the file in random access memory and reading the audio content and/or the graphical content.

17. Method according to one of claims 1 to 16, according to that said content is transferred to the phone in a compressed format and said content is stored in the phone in a decompressed format, said content being read in real time under this format upon reception of an incoming call.

18. Mobile phone comprising means to download ring tones for personalization of mobile phones, an operating layer adapted to store an application (6) for reading graphical animations contents, means for triggering the reading of this graphical animations content upon reception of an incoming call **characterized by** means for downloading an application (6) for reading graphical animations content, and memory means for a read application (6) at the operating layer of the mobile phone, and by
means for downloading with the application for reading the graphical content, a background task application in the operating layer of the mobile phone, which monitors the notification of a call to the phone server of said layer and activates the reading of the graphical content by the reading application.

19. Phone according to claim 18, **characterized in that** the reading application (6) is adapted for reading a codec (7) which comprises an audio content and a graphical animations content.

20. Phone according to claim 18 or 19, **characterized in that** with the reading application (6) is a background task application which is adapted to monitor the notification of a call to the phone server (1) of said layer and adapted to activate the graphical content reading by the reading application (6).

21. Phone according to claim 18 or 19, **characterized in that** the reading application is adapted to monitor in background task the activation of a codec (7) corresponding to a ring tone which is associated to it, the reading of the graphical animations content being adapted to be triggered when said codec (7) activation is detected.

22. Phone according to claim 18 or 19, **characterized in that** the reading application (6) is adapted to monitor, in background task, the signalling of a call to an interface phone application or to the phone server (1) of the operating layer, the reading to the graphical animation content being adapted to be triggered when an event corresponding to this signalling is detected.

23. Phone according to one of claims 18 to 22, **characterized in that** the reading application (6) is adapted to bypass the graphical layers of the phone to directly attack the screen memory.

24. Phone according to claim 23, **characterized in that** the reading application (6) comprises means for masking certain icons displaying areas of the phone.

25. Phone according to one of claims 18 to 24, **characterized by** comprising means adapted for detecting that the user decides to change his favourite ring tone, and for blocking the activation of the corresponding graphical animation when a change of this type is detected.

26. Phone according to one of claims 18 to 25, **characterized by** comprising an interface application, if need be also downloaded which allows the user to compose his own combined contents from the content already present on his phone or which he can download otherwise.

27. Mobile phone of one of claims 18 to 26 adapted for enabling the reading of at least a personalization content upon reception of an incoming call, **characterized in that** the phone comprises an application (6) for reading graphical content possibly downloaded in the operating layer of the mobile phone, adapted for monitoring in background task the activation of a codec (7) corresponding to the audio content and for activating the reading of the associated personalization content when said activation of the codec (7) is detected.

28. Mobile phone of one of claims 18 to 27 adapted for the reading of at least a personalization content upon reception of an incoming call on a mobile phone, **characterized in that** the phone comprises an application (6) for reading said content, possibly downloaded in the operating layer of the mobile phone, adapted for monitoring in background task the notification of an incoming call to an interface phone application or to a phone server (1) of said layer and for activating the reading of said content upon notification of an incoming call.

29. Mobile phone of one of claims 18 to 28 adapted for enabling the substantially synchronous reading of an audio content and a graphical content upon reception of an incoming call on a mobile phone, **characterized in that** it comprises an application (6) for reading the graphical content possibly downloaded in the operating layer of the mobile phone adapted for monitoring in background task the notification of an incoming call to an interface phone application or to a phone server (1) of said layer and for activating the reading of said graphic content upon notification of an incoming call.

30. Mobile phone of one of claims 18 to 29 adapted for allowing the reading of at least one personalization content upon reception of an incoming call on the mobile phone, **characterized by** comprising an application, which upon downloading of said content, automatically places it as a favourite intended to be activated upon reception of the next incoming call, this step being performed without intervention of the user in the different configuration menus of the phone.

31. Mobile phone of one of claims 18 to 30, **characterized by** comprising an interface application, memorized at the operating layer of the phone, adapted for allowing a user to compose a combined content by associating an audio content and a graphical animation content, from contents already present in the phone or which he can download otherwise, the graphical animation content being intended to be read by a reading application (6) of the phone when the audio content is played on the phone upon reception of an incoming call.

32. Mobile phone of one of claims 18 to 31 adapted to allow the reading of a graphical animation content upon reception of an incoming call, **characterized by** comprising a reading application adapted for displaying in sequence fixed images in native format according to a parametrizable frame rate upon reception of an incoming call.

33. Mobile phone of one of claims 18 to 32 adapted for allowing the downloading of ring tones for personalizing mobile phones, **characterized by** comprising means for memorizing a file including an audio content and/or a graphical animation content, in encrypted form, at the operating layer of the phone, and a reading application (6) adapted, upon reception of an incoming call, for decrypting the file in random access memory and for reading the audio content and/or the graphical content.

## Patentansprüche

1. Verfahren zum Personalisieren von Mobiltelefonen, umfassend ein Herunterladen von Daten zusätzlich zu Klingeltönen durch einen Audioinhalt, wobei die Daten einen graphischen Animationsinhalt umfassen, um auf dem Bildschirm des Mobiltelefons angezeigt zu werden, wenn der Audioinhalt auf dem Telefon beim Empfang eines eingehenden Anrufs abgespielt wird, **dadurch gekennzeichnet, dass** es darüber hinaus ein Herunterladen einer Anwendung (6) zum Lesen eines graphischen Animationsinhalts und gegebenenfalls auch eines Audioinhalts umfasst, der gleichzeitig heruntergeladen wird oder vorher heruntergeladen und an der Betriebsschicht des Mobiltelefons gespeichert wurde, und dass
mit der Anwendung zum Lesen des graphischen Inhalts eine Hintergrund-Task-Anwendung in die Betriebsschicht des Mobiltelefons heruntergeladen wird, die die Benachrichtigung über einen Anruf am Telefon-Server der Schicht überwacht und das Lesen des graphischen Inhalts durch die Leseanwendung aktiviert.

2. Verfahren nach Anspruch 1, **dadurch gekennzeichnet, dass** die heruntergeladenen Daten einen Codec (7) umfassen, der einen Audioinhalt und einen graphischen Animationsinhalt umfasst, wobei eine Anwendung (6) zum Lesen eines solchen Typs von Codec (7) gleichzeitig heruntergeladen wird oder vorher heruntergeladen und an der Betriebsschicht des Mobiltelefons gespeichert wurde.

3. Verfahren nach Anspruch 1, **dadurch gekennzeichnet, dass** die heruntergeladenen Daten einen Codec (7), der einen Audioinhalt umfasst, und einen Codec (7) umfassen, der einen graphischen Animationsinhalt umfasst.

4. Verfahren nach einem der vorhergehenden Ansprüche, **dadurch gekennzeichnet, dass** bei jedem neuen Herunterladen die heruntergeladenen Daten eine Anwendung (6) zum Lesen des graphischen Animationsinhalts und/oder des Audioinhalts umfassen.

5. Verfahren nach Anspruch 4, **dadurch gekennzeichnet, dass** die heruntergeladenen Daten ebenfalls eine oder mehrere Konfigurationsdateien umfassen.

6. Verfahren nach einem der vorhergehenden Ansprüche 1 bis 5, **dadurch gekennzeichnet, dass** die Leseanwendung, die in die Betriebsschicht heruntergeladen wurde, in einem Hintergrund-Task die Aktivierung eines Codecs (7) überwacht, der einem Klingelton entspricht, der ihm zugeordnet ist, wobei das Lesen des graphischen Animationsinhalts getriggert wird, wenn die Codec-(7)-Aktivierung erkannt wird.

7. Verfahren nach einem der vorhergehenden Ansprüche 1 bis 5, **dadurch gekennzeichnet, dass** die Leseanwendung, die in die Betriebsschicht heruntergeladen wurde, in einem Hintergrund-Task das Signalisieren eines Anrufs an eine Schnittstellentelefonanwendung oder an den Telefon-Server (1) der Betriebsschicht überwacht, wobei das Lesen des graphischen Animationsinhalts getriggert wird, wenn ein Ereignis erkannt wird, das dieser Signalisierung entspricht.

8. Verfahren nach einem der vorhergehenden Ansprüche, **dadurch gekennzeichnet, dass** die Leseanwendung (6) die graphischen Schichten des Telefons umgeht, um direkt in den Bildschirmspeicher zu schreiben.

9. Verfahren nach Anspruch 8, **dadurch gekennzeichnet, dass** die Leseanwendung (6) eine Maske verwendet, um nicht in einen Konflikt mit bestimmten Bereichen des Telefons zum Darstellen von Icons zu geraten.

10. Verfahren nach einem der vorhergehenden Ansprüche, **dadurch gekennzeichnet, dass** die Daten von einem Container heruntergeladen werden, der graphische Animationen in einem nativen Format des Mobiltelefons oder seines Betriebssystems speichert.

11. Verfahren nach einem der vorhergehenden Ansprüche 1 bis 10, **dadurch gekennzeichnet, dass** beim Herunterladen die Daten heruntergeladen werden, indem sie derart konvertiert werden, dass die graphischen Animationen im Mobiltelefon im nativen Bildformat desselben oder seines Betriebssystems gespeichert werden.

12. Verfahren nach einem der vorhergehenden Ansprüche, **dadurch gekennzeichnet, dass** jeder neue heruntergeladene Klingelton oder jeder neue heruntergeladene Klingelton und graphischer Animationsinhalt in dem Mobiltelefon automatisch als ein Favorit gespeichert wird, der dazu bestimmt ist, bei dem nächsten eingehenden Anruf aktiviert zu werden.

13. Verfahren nach Anspruch 12, **dadurch gekennzeichnet, dass** die Anwendung installiert wird oder der dem Codec (7) zugeordnete Inhalt aktiviert wird, wobei die Gesamtheit aller notwendigen Aktionen für eine gleichzeitige Aktivierung des Tons und der Graphik mit Hilfe eines Hintergrund-Task-Servers (5) und einer Telefonanwendung (4) oder mit Hilfe einer Telefonanwendung (4) und eines Codecs (7) automatisch durchgeführt werden, wobei die Aktivierung des Codecs durch die Leseanwendung oder mit Hilfe einer Telefonanwendung (4) und einer Leseanwendung (6) oder durch Verwenden eines Codecs (7) erkannt wird, der zusätzlich zum Toninhalt eine Animation enthält.

14. Verfahren nach einem der Ansprüche 1 bis 13, **dadurch gekennzeichnet, dass** es die Schritte umfasst, gemäß denen:
- ein Benutzer einen kombinierten Inhalt durch Zuordnen eines Audioinhalts und eines graphischen Animationsinhalts aus Inhalten, die bereits im Telefon vorhanden sind oder die er anderweitig herunterladen kann, mit Hilfe einer Schnittstellenanwendung, die in der Betriebsschicht des Telefons gespeichert ist, zusammensetzt,
- wenn der Audioinhalt auf dem Telefon beim Empfang eines eingehenden Anrufs abgespielt wird, eine Anwendung (6) zum Lesen eines Inhalts einer graphischen Animation und gegebenenfalls auch zum Lesen eines Audioinhalts den graphischen Animationsinhalt liest.

15. Verfahren nach einem der Ansprüche 1 bis 14, **dadurch gekennzeichnet, dass** es die folgenden Schritte umfasst:
Speichern im Mobiltelefon eines graphischen Animationsinhalts als feststehende Bilder in einem nativen Format gemäß einer parametrisierbaren Frame-Rate.

16. Verfahren nach einem der Ansprüche 1 bis 14, **dadurch gekennzeichnet, dass** es die folgenden Schritte umfasst:
- Speichern einer Datei, die einen Audioinhalt und/oder einen graphischen Animationsinhalt aufweist, in verschlüsselter Form an der Betriebsschicht des Telefons,
- beim Empfang eines eingehenden Anrufs, Entschlüsseln der Datei in einem Direktzugriffsspeicher und Lesen des Audioinhalts und/oder des graphischen Inhalts.

17. Verfahren nach einem der Ansprüche 1 bis 16, gemäß dem der Inhalt an das Telefon in einem komprimierten Format übertragen wird und der Inhalt im Telefon in einem dekomprimierten Format gespeichert wird, wobei der Inhalt in diesem Format beim Empfang eines eingehenden Anrufs in Echtzeit gelesen wird.

18. Mobiltelefon, das Mittel zum Herunterladen von Klingeltönen zum Personalisieren von Mobiltelefonen, eine Betriebsschicht, die eingerichtet ist, eine Anwendung (6) zum Lesen eines graphischen Animationsinhalts zu speichern, Mittel zum Triggern des Lesens dieses graphischen Animationsinhalts beim Empfang eines eingehenden Anrufs umfasst, **dadurch gekennzeichnet, dass** das Telefon Mittel zum Herunterladen einer Anwendung (6) zum Lesen eines graphischen Animationsinhalts und Speichermittel für die Anwendung (6) zum Lesen an der Betriebsschicht des Mobiltelefons und Mittel zum Herunterladen mit der Anwendung (6) zum Lesen des graphischen Inhalts einer Hintergrund-Task-Anwendung in die Betriebsschicht des Mobiltelefons umfasst, die die Benachrichtigung über einen Anruf an einen Telefon-Server der Schicht überwacht und das Lesen des graphischen Inhalts durch die Anwendung zum Lesen aktiviert.

19. Telefon nach Anspruch 18, **dadurch gekennzeichnet, dass** die Leseanwendung (6) zum Lesen eines Codecs (7) eingerichtet ist, der einen Audioinhalt und einen graphischen Animationsinhalt umfasst.

20. Telefon nach Anspruch 18 oder 19, **dadurch gekennzeichnet, dass** mit der Anwendung (6) zum Lesen eine Hintergrund-Task-Anwendung vorhanden ist, die eingerichtet ist, die Benachrichtigung über einen Anruf an den Telefon-Server (1) der Schicht zu überwachen, und eingerichtet ist, ein Lesen des graphischen Inhalts durch die Anwendung (6) zum Lesen zu aktivieren.

21. Telefon nach Anspruch 18 oder 19, **dadurch gekennzeichnet, dass** die Anwendung (6) zum Lesen eingerichtet ist, in einem Hintergrund-Task die Aktivierung eines Codecs (7), der einem Klingelton entspricht, der ihm zugeordnet ist, zu überwachen, wobei das Lesen des graphischen Animationsinhalts getriggert werden kann, wenn die Codec-(7)-Aktivierung erkannt wird.

22. Telefon nach Anspruch 18 oder 19, **dadurch gekennzeichnet, dass** die Anwendung (6) zum Lesen eingerichtet ist, in einem Hintergrund-Task das Signalisieren eines Anrufs an eine Schnittstellentelefonanwendung oder an den Telefon-Server (1) der Betriebsschicht zu überwachen, wobei das Lesen des graphischen Animationsinhalts getriggert werden kann, wenn ein Ereignis erkannt wird, das dieser Signalisierung entspricht.

23. Telefon nach einem der Ansprüche 18 bis 23, **dadurch gekennzeichnet, dass** die Anwendung (6) zum Lesen eingerichtet ist, die graphischen Schichten des Telefons zu umgehen, um den Bildschirmspeicher direkt in Angriff zu nehmen.

24. Telefon nach Anspruch 23, **dadurch gekennzeichnet, dass** die Anwendung (6) zum Lesen Mittel zum Maskieren gewisser Bereiche des Telefons zum Darstellen von Icons umfasst.

25. Telefon nach einem der Ansprüche 18 bis 24, **dadurch gekennzeichnet, dass** es Mittel umfasst, die eingerichtet sind zum Erkennen, dass sich der Benutzer entscheidet, seinen favorisierten Klingelton zu ändern, und zum Blockieren der Aktivierung der entsprechenden graphischen Animation, wenn eine Änderung dieses Typs erkannt ist.

26. Telefon nach einem der Ansprüche 18 bis 25, **dadurch gekennzeichnet, dass** es eine Schnittstellenanwendung, die gegebenenfalls ebenfalls heruntergeladen ist, umfasst, die es dem Benutzer erlaubt, seine eigenen kombinierten Inhalte aus dem Inhalt zusammenzusetzen der bereits auf seinem Telefon vorhanden ist oder den er anderweitig herunterladen kann.

27. Mobiltelefon nach einem der Ansprüche 18 bis 26, das eingerichtet ist ein Lesen von mindestens einem Personalisierungsinhalt beim Empfang eines eingehenden Anrufs zu ermöglichen, **dadurch gekennzeichnet, dass** das Telefon eine Anwendung (6) zum Lesen eines graphischen Inhalts umfasst, die möglicherweise in die Betriebsschicht des Mobiltelefons heruntergeladen wurde, die eingerichtet ist zum Überwachen in einem Hintergrund-Task der Aktivierung eines Codecs (7), der dem Audioinhalt entspricht, und zum Aktivieren des Lesens des zugeordneten Personalisierungsinhalts, wenn die Aktivierung des Codec (7) erkannt ist.

28. Mobiltelefon nach einem der Ansprüche 18 bis 27, das eingerichtet ist zum Lesen von mindestens einem Personalisierungsinhalt beim Empfang eines eingehenden Anrufs auf einem Mobiltelefon, **dadurch gekennzeichnet, dass** das Telefon eine Anwendung (6) zum Lesen des Inhalts umfasst, die möglicherweise in die Betriebsschicht des Mobiltelefons heruntergeladen wurde, die eingerichtet ist zum Überwachen in einem Hintergrund-Task der Benachrichtigung über einen eingehenden Anruf an eine Schnittstellentelefonanwendung oder an den Telefon-Server (1) der Schicht und zum Aktivieren des Lesens des Inhalts beim Benachrichtigen über einen eingehenden Anruf.

29. Mobiltelefon nach einem der Ansprüche 18 bis 28, das eingerichtet ist, das im Wesentlichen gleichzeitige Lesen eines Audioinhalts und eines graphischen Inhalts beim Empfang eines eingehenden Anrufs auf einem Mobiltelefon zu ermöglichen, **dadurch gekennzeichnet, dass** es eine Anwendung (6) zum Lesen des graphischen Inhalts umfasst, die möglicherweise in die Betriebsschicht des Mobiltelefons heruntergeladen wurde, die eingerichtet ist zum Überwachen in einem Hintergrund-Task der Benachrichtigung über einen eingehenden Anruf an eine Schnittstellentelefonanwendung oder an den Telefon-Server (1) der Schicht und zum Aktivieren des Lesens des graphischen Inhalts beim Benachrichtigen über einen eingehenden Anruf.

30. Mobiltelefon nach einem der Ansprüche 18 bis 29, das eingerichtet ist, das Lesen von mindestens einem Personalisierungsinhalt beim Empfang eines eingehenden Anrufs auf dem Mobiltelefon zu ermöglichen, **dadurch gekennzeichnet, dass** es eine Anwendung umfasst, die beim Herunterladen des Inhalts diesen automatisch als einen Favoriten platziert, der dazu bestimmt ist, beim Empfang des nächsten eingehenden Anrufs aktiviert zu werden, wobei dieser Schritt ohne eine Intervention des Benutzers in den unterschiedlichen Konfigurationsmenüs des Telefons durchgeführt wird.

31. Mobiltelefon nach einem der Ansprüche 18 bis 30, **dadurch gekennzeichnet, dass** es eine Schnittstellenanwendung umfasst, die an der Betriebsschicht des Telefons gespeichert ist, die eingerichtet ist, es einem Benutzer zu ermöglichen, einen kombinierten Inhalt durch Zuordnen eines Audioinhalts und eines graphischen Animationsinhalts aus Inhalten, die bereits im Telefon vorhanden sind, oder die er anderweitig herunterladen kann, zusammenzusetzen, wobei der graphische Animationsinhalt dazu bestimmt ist, von einer Anwendung (6) zum Lesen des Telefons gelesen zu werden, wenn der Audioinhalt auf dem Telefon beim Empfang eines eingehenden Anrufs abgespielt wird.

32. Mobiltelefon nach einem der Ansprüche 18 bis 31, das eingerichtet ist, das Lesen eines graphischen Animationsinhalts beim Empfang eines eingehenden Anrufs zu ermöglichen, **dadurch gekennzeichnet, dass** es eine Leseanwendung umfasst, die eingerichtet ist zum sequenziellen Darstellen von feststehenden Bildern in einem nativen Format gemäß einer parametrisierbaren Frame-Rate beim Empfang eines eingehenden Anrufs.

33. Mobiltelefon nach einem der Ansprüche 18 bis 32, das eingerichtet ist, das Herunterladen von Klingeltönen zum Personalisieren von Mobiltelefonen zu ermöglichen, **dadurch gekennzeichnet, dass** es Mittel zum Speichern einer Datei, die einen Audioinhalt und/oder einen graphischen Animationsinhalt aufweist, in einer verschlüsselten Form an der Betriebsschicht des Telefons, und einer Anwendung (6) zum Lesen umfasst, die eingerichtet ist, beim Empfang eines eingehenden Anrufs die Datei in einem Direktzugriffsspeicher zu entschlüsseln und den Audioinhalt und/oder den graphischen Inhalt zu lesen.
